# EUROPEAN PATENT SPECIFICATION

(11) **EP 0 974 262 B1**
(45) Date of publication and mention of the grant of the patent: **02.05.2003**
(21) Application number: 99113694.6
(22) Date of filing: 16.07.1999
(51) Int. Cl.: A01G 3/04

(54) **Apparatus for the automated pruning of tree-like plants, particularly vines and the like**
Automatische Ästungsvorrichtung für baumähnliche Pflanzen, insbesondere Reben oder dergleichen
Appareil pour l'élagage automatique de plantes du genre arbustes, en particulier vignes ou arbustes similaires

(30) Priority: 22.07.1998 IT MI981694
(43) Date of publication of application: 26.01.2000
(73) Proprietor: Bacchini Sandro, 47842 San Giovanni in Marignano (Rimini) (IT); Bacchini Leo, 47842 San Giovanni in Marignano (Rimini) (IT); Vision Device S.r.l., 66010 Torrevecchia Teatina (Chieti) (IT); Vicentini Pietro, 37134 Verona (IT)
(72) Inventor: Bacchini, Francesco, 47842 San Giovanni in Marignano (Rimini) (IT); Raschiatore Paolo, 65128 Pescara (IT); Vicentini, Pietro, 37134 Verona (IT)
(74) Representative: Petruzziello, Aldo

(56) References cited:
- DE-U- 9 207 388
- PATENT ABSTRACTS OF JAPAN vol. 014, no. 566 (C-0789), 17 December 1990 (1990-12-17) & JP 02 245121 A (ISEKI & CO LTD), 28 September 1990 (1990-09-28)

## Description

The present invention relates to an apparatus for the automated pruning of tree-like plants, particularly vines and the like.

More particularly, the invention relates to an apparatus for the automated pruning of the branches that extend from the main branch or stem of the plant.

It is known that the mechanical pruning of tree-like plants, particularly vines, is currently performed by means of machines in which the human role is particularly important in terms of quality and quantity. These machines are in fact constituted by a cutting device usually applied to a tractor or similar machine which allows to move along the row of vines and to cut, by means of the cutting device, the branches to be eliminated around the central branch or stem of the plant.

The use of this device suffers drawbacks: first of all, the fact that if one wishes to use a single operator, said operator is forced to both manage the means of transport and simultaneously adjust the cutting elements.

In this case the operator has to perform a task which is impracticable due to the complexity and number of the operations that he would have to perform.

Otherwise it is necessary to resort to the presence of a plurality of operators, with a high effect on cost.

The fact of having to resort to operators assigned to pruning, which usually occurs once a year in the case of vines, entails the need to hire seasonal workers, specialized in that particular task, with the consequent increase in costs.

Another example of apparatus for the pruning of tree-like plants is shown in JP 02245121 A.

The aim of the present invention is to provide an apparatus for pruning tree-like plants, particularly vines and the like, wherein pruning is fully automated and can be easily performed by a single operator.

Within the scope of this aim, an object of the present invention is to provide an apparatus for pruning tree-like plants, particularly vines and the like, in which it is possible to reduce the time used per processed surface unit with respect to the time traditionally used for manual or semiautomatic operations.

A further object of the present invention is to provide an apparatus for the pruning of tree-like plants, particularly vines and the like, which eliminates human error during pruning.

A further object of the present invention is to provide an apparatus for the automated pruning of tree-like plants, particularly vines and the like, which eliminates operators who complete the pruning operation behind the pruning machine.

Still a further object of the present invention is to provide an apparatus for the automated pruning of tree-like plants, particularly vines and the like, which is highly reliable, relatively easy to manufacture and at competitive costs.

This aim, these objects and others which will become apparent hereinafter are achieved by an apparatus for the automated pruning of tree-like plants, particularly vines and the like, comprising a supporting frame adapted to adjustably support at least one cutting device, characterized in that it comprises at least one image acquisition means adapted to detect the position of a tree-like plant with respect to said at least one cutting device, and a processing unit adapted to send position adjustment command signals to said at least one cutting device, in relation to said acquired images of the stem of said tree-like plant with respect to said at least one cutting device.

Further characteristics and advantages of the invention will become apparent from the following detailed description of preferred embodiments of the apparatus according to the invention, illustrated only by way of non-limitative example in the accompanying drawings, wherein:
Figure 1 is a schematic view of a first embodiment of the pruning apparatus according to the present invention;
Figure 2 is a schematic view of a second embodiment of the pruning apparatus according to the present invention;
Figure 3 is a diagram illustrating one of the particularities of the apparatus according to the present invention; and
Figure 4 is a block diagram of the pruning control implemented in the apparatus according to the present invention.

With reference to the above figures, the pruning apparatus according to the present invention, generally designated by the reference numeral 1, comprises a supporting frame 2 which is designed to be connected to the front part or in any other suitable position of an agricultural machine, such as a tractor or the like, and travels parallel to the extension of the main branch or stem of the tree-like plant to be pruned.

Pruning occurs by eliminating branches which protrude from the main branch of the vine.

The supporting frame 2 supports at least one cutting device, preferably a plurality of cutting devices or cutter bars, designated by the reference numeral 3, which are connected to the supporting frame 2 not in a fixed manner but by means of actuators which allow to adjust their relative position, so as to make the absolute position of the pruning machine independent of the absolute position of the cut performed on the tree-like plant.

The actuators allow both transverse and vertical adjustment of the cutting devices 3, so as to adjust the height of the devices to the actual height of the stem or main branch of the row.

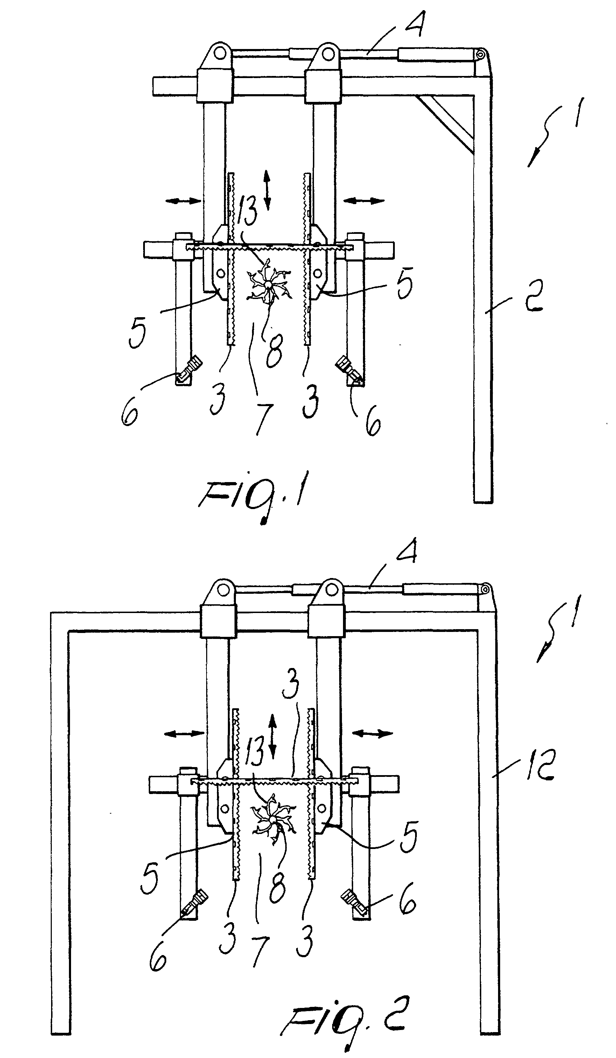

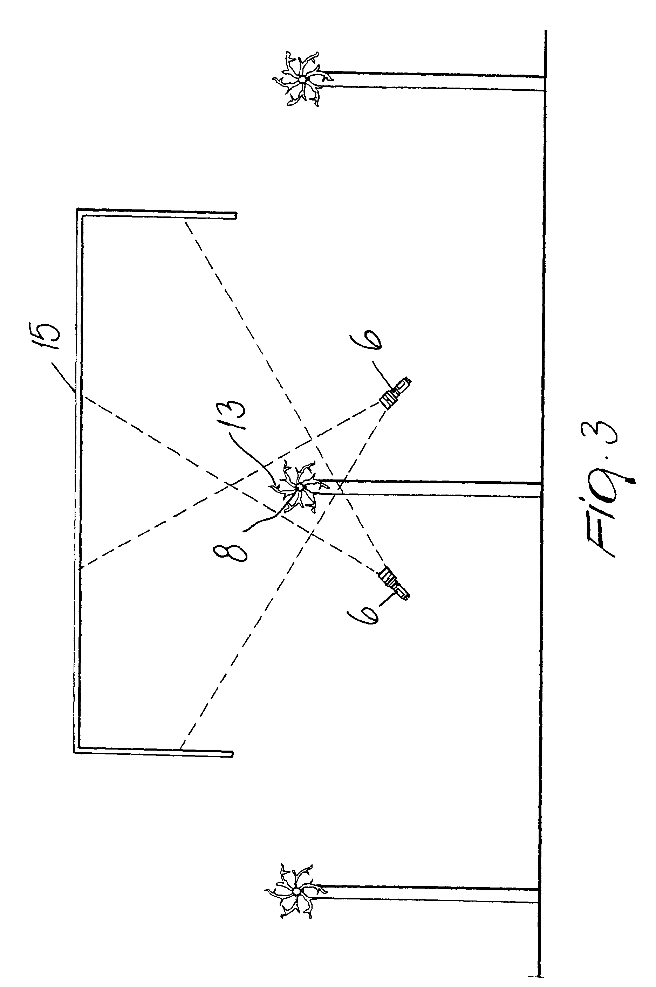

The actuators are designated, in Figures 1 and 2, by the reference numeral 4 for the actuator that allows the transverse movement of the cutting devices 3 and by the reference numeral 5 for the actuator that allows the vertical movement of the cutting devices 3.

Figure 1 illustrates a type of pruning apparatus designed to be arranged laterally to the plant to be pruned and Figure 2 illustrates an apparatus of the straddling type, i.e., in which the supporting frame, designated by the reference numeral 12 in this case, is shaped so as to straddle the tree-like plant to be pruned.

The actuators 4 and 5 can be pneumatically-actuated or oleodynamically-actuated cylinders but can also be guides with racks or worm screws actuated by electric motors.

The cutting devices 3 can be linear cutter bars, or circular-saw or bandsaw devices, for tree-like crops other than vines.

Figures 1 and 2 illustrate three cutting devices 3.

The pruning apparatus comprises, in order to provide an automated operation, at least one image acquisition device, such as for example a TV camera, preferably of the CCD matrix type, designated by the reference numeral 6, which is rigidly connected to the cutting device.

Preferably, there are a plurality of TV cameras 6, arranged so as to frame the tree-like plants to be cut from below thus having the sky as background and therefore not be disturbed by images which might bias the acquisitions performed by the TV cameras 6.

In the figures, the reference numeral 7 designates the row, the reference numeral 8 designates the stem or main branch of the tree-like plant, and the reference numerals 13 designate the branches which must be cropped around the main stem 8.

The TV cameras 6, in addition to being arranged so as to point upward, are preferably arranged at an angle to each other so as to be able to perform spatial position correction.

More than two TV cameras can be useful for providing more complex systems for the simultaneous pruning of multiple shoots or branches with independent adjustment.

The actuators 4 and 5 are directly controlled by an electronic apparatus which employs artificial vision, achieved by means of the TV camera 6, in order to acquire the actual position of the stem or main branch of the plant, then calculate the movement to be performed in order to center the cutting devices 3 in relation to the stem 8, and then send the electrical correction signals to the actuators 4 and 5, which move the cutting devices 3 as requested.

Since the TV cameras are rigidly fixed to the cutting system, position corrections occur simultaneously both on the TV cameras 6 and on the cutting devices 3.

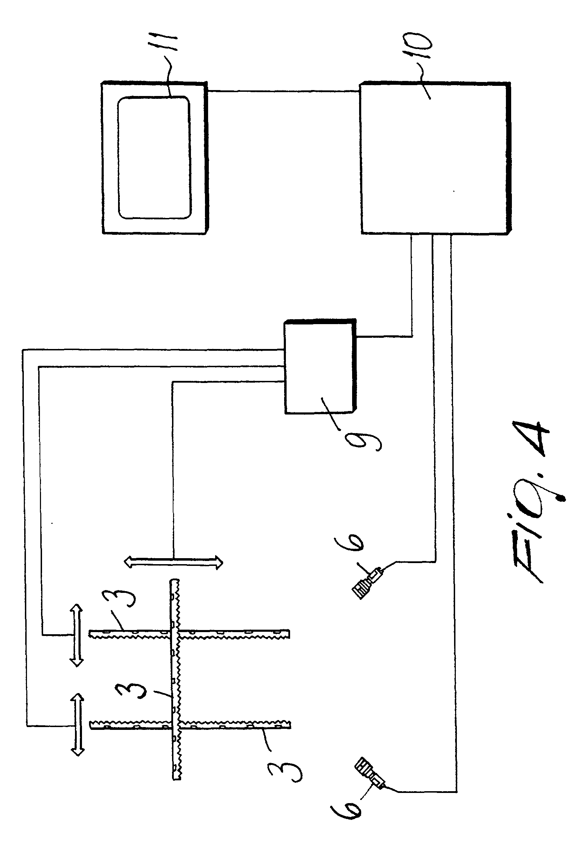

Figure 4 illustrates a block diagram of the electronic apparatus for controlling the position of the actuators and therefore of the cutting devices 3 in relation to the main stem or branch 8 of the tree-like plant to be cropped.

As shown, the control TV cameras 6 are connected to a processing unit 10, which is connected to display means 11 which are designed to constitute an operator interface.

The display device 11 is preferably of the active-matrix type with a device for control by directly touching the screen.

A concentrator 9 receives in input signals arriving from the processing unit 10 in order to control the respective actuators 4 and 5 so as to move the cutting devices 3 both vertically and transversely with respect to the stem 8 of the row.

The signal concentrator 9 is adapted to convert the electric signals in output from the processing unit 10 appropriately according to the type of actuator 4 and 5 used. In particular, the actuators can be for example proportional or on/off adjustment valves (for pneumatic and oleodynamic actuators) or electric power regulators (for electric actuators).

The processing unit 10 then collects the images acquired by the TV cameras 6, processes them to obtain positions of the cutting devices 3 in relation to the stem 8 of the tree-like plant to be cropped, calculates by means of suitable algorithms the corrections to be performed and then sends the corresponding electrical signals to the concentrator 9 connected to the actuators 4 and 5.

The algorithms for calculating the corrections to be applied therefore provide a feedback so as to return the TV cameras 6, rigidly coupled to the cutting devices, and said cutting devices 3 always to the same position with respect to the stem or branch 8 to be pruned.

This allows to follow the vertical and transverse positional variations of the stem 8 without having to manually adjust the cutting devices and without accordingly entailing the need to have more than one operator.

In practice it has been observed that the automated pruning apparatus according to the invention fully achieves the intended aim and objects, since it allows to effectively perform automatic pruning, thus optimizing farm organization as well as work efficiency with a considerable reduction in the time used per unit of surface processed with respect to the time traditionally required for manual or semiautomatic operations.

Moreover, automated pruning allows to perform all the work of the vineyard with operators who are not particularly specialized, thus eliminating the presence of seasonal workers, i.e., specialized workers assigned to pruning, which normally occurs once a year, as mentioned.

Automated pruning further allows to avoid human errors during execution, since the algorithms that allow the feedback of actuation and position signals to the actuators maintain, by means of calculations processed on the basis of the images acquired by the TV cameras, always the same preset distance between the cutting devices and the stem or main branch of the tree-like plant to be pruned.

The apparatus can also be used at night.

The apparatus thus conceived is susceptible of numerous modifications and variations, all of which are within the scope of the inventive concept.

Thus, for example, the apparatus according to the invention can also be used with self-propelled supporting frames, without therefore requiring the presence of a tractor or similar agricultural machine.

Furthermore, the TV cameras, which are generally tilted upward so as to frame the stem or branches thus having the sky as a background, for even greater uniformity (especially to avoid direct glare from the sun when it has the same orientation as the TV camera) can have as a background a sheet of a uniform color fixed to the supporting structure which is rigidly coupled to the means of transport. The sheet, designated by the reference numeral 15 in Figure 3, therefore allows to provide protection and light screening.

Figure 3 is a view of the arrangement of two TV cameras 6 which are arranged at an angle and trained upward, so as to frame the vine to be pruned, with the main branch 8 and the branches 13 to be pruned.

The sheet 15 is sized so as to always cover the background framed by the TV cameras 6 within the positional limits provided for the latter by the electronic apparatus for controlling the position of the TV cameras.

Finally, all the details may be replaced with other technically equivalent elements.

In practice, the materials employed, so long as they are compatible with the specific use, as well as the dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for the automated pruning of tree-like plants, particularly vines and the like, comprising a supporting frame (2, 12) which is adapted to adjustably support at least one cutting device (3), **characterized in that** it comprises at least one image acquisition means (6) which is adapted to detect the position of a tree-like plant with respect to said at least one cutting device, and a processing unit (10) adapted to send position adjustment command signals to said at least one cutting device, in relation to said acquired images of the stem (8) of said tree-like plant with respect to said at least one cutting device.

2. The apparatus according to claim 1, **characterized in that** said at least one image acquisition means comprises at least one TV camera which is designed to acquire images of said stem of the tree-like plant in relation to said cutting devices.

3. The apparatus according to claim 2, **characterized in that** it comprises two TV cameras arranged so as to point upward in order to frame said tree-like plant.

4. The apparatus according to claim 3, **characterized in that** said TV cameras are arranged at an angle to each other.

5. The apparatus according to claim 1, **characterized in that** it comprises a plurality of cutting devices moved by respective actuators (4, 5), said actuators being driven by command signals sent by said processing unit.

6. The apparatus according to claim 1, **characterized in that** it comprises display means (11) which are connected to said processing unit in order to display the general operating condition of the apparatus.

7. The apparatus according to claim 5, **characterized in that** said cutting devices are moved both vertically and transversely with respect to the stem of the tree-like plant to be pruned.

8. The apparatus according to claim 2, **characterized in that** said processing unit processes the images received from said at least one TV camera in order to determine a cutting distance from the centroid line of the stem or main branch to be pruned, in a constant or variable manner.

9. The apparatus according to claim 2, **characterized in that** said at least one TV camera is rigidly coupled to said at least one cutting device.

10. The apparatus according to claim 1, **characterized in that** said supporting frame is L-shaped.

11. The apparatus according to claim 10, **characterized in that** said supporting frame is shaped like an inverted U or a T, so as to straddle the tree-like plant to be pruned.

12. The apparatus according to claim 1, **characterized in that** said supporting frame is adapted to be mounted on an agricultural machine.

13. The apparatus according to claim 5, **characterized in that** it comprises a concentrator (9) which is adapted to receive in input signals emitted by said processing unit and to convert said signals into commands adapted to actuate said actuators designed to move said cutting devices.

## Patentansprüche

1. Ein Gerät zur automatischen Beschneidung baumartiger Pflanzen, insbesondere von Weinstöcken u.ä., das ein Traggestell (2, 12) umfaßt, das geeignet ist, einstellbar mindestens eine Schneidevorrichtung (3) zu tragen, **dadurch gekennzeichnet, daß** es mindestens ein Bilderfassungsmittel (6) umfaßt, das geeignet ist, die Stellung einer baumartigen Pflanze im Verhältnis zu der genannten mindestens einen Schneidevorrichtung zu bestimmen, sowie eine Verarbeitungseinheit (10), die geeignet ist, Steuersignale für die entsprechende Justierung der Stellung an die genannte mindestens eine Schneidevorrichtung zu senden, und zwar in Bezug auf die genannten erfaßten Bilder des Stamms (8) der genannten baumartigen Pflanze im Verhältnis zu der genannten mindestens einen Schneidevorrichtung.

2. Das Gerät gemäß Anspruch 1, **dadurch gekennzeichnet, daß** das genannte mindestens eine Bilderfassungsmittel mindestens eine TV-Kamera umfaßt, die dazu bestimmt ist, Bilder des genannten Stamms der baumartigen Pflanze im Verhältnis zu den genannten Schneidevorrichtungen zu erfassen.

3. Das Gerät gemäß Anspruch 2, **dadurch gekennzeichnet, daß** es zwei TV-Kameras umfaßt, die so angeordnet sind, daß sie nach oben gerichtet sind, um die genannte baumartige Pflanze aufzunehmen.

4. Das Gerät gemäß Anspruch 3, **dadurch gekennzeichnet, daß** die genannten TV-Kameras jeweils übereck zueinander angeordnet sind.

5. Das Gerät gemäß Anspruch 1, **dadurch gekennzeichnet, daß** es eine Vielzahl von Schneidevorrichtungen umfaßt, die jeweils durch die entsprechenden Antriebe (4, 5) bewegt werden, wobei die genannten Antriebe durch Steuersignale angetrieben werden, die von der genannten Verarbeitungseinheit ausgesandt werden.

6. Das Gerät gemäß Anspruch 1, **dadurch gekennzeichnet, daß** es Anzeigeelemente (11) umfaßt, die mit der genannten Verarbeitungseinheit verbunden sind, um den allgemeinen Betriebszustand des Geräts anzuzeigen.

7. Das Gerät gemäß Anspruch 5, **dadurch gekennzeichnet, daß** die genannten Schneidevorrichtungen sowohl senkrecht wie quer im Verhältnis zum Stamm der baumartigen Pflanze bewegt werden, die beschnitten werden soll.

8. Das Gerät gemäß Anspruch 2, **dadurch gekennzeichnet, daß** die genannte Verarbeitungseinheit die von der genannten mindestens einen TV-Kamera empfangenen Bilder verarbeitet, um einen Schnittabstand von der baryzentrischen Linie des Stamms oder Hauptastes zu bestimmen, der beschnitten werden soll, und zwar in gleichbleibender oder variierbarer Weise.

9. Das Gerät gemäß Anspruch 2, **dadurch gekennzeichnet, daß** die genannte mindestens eine TV-Kamera starr mit der genannten mindestens einen Schneidevorrichtung gekoppelt ist.

10. Das Gerät gemäß Anspruch 1, **dadurch gekennzeichnet, daß** das genannte Traggestell L-förmig ist.

11. Das Gerät gemäß Anspruch 10, **dadurch gekennzeichnet, daß** das genannte Traggestell die Form eines umgekehrten U oder eines T aufweist, so daß es sich rittlings an der baumartig Pflanze anordnet, die beschnitten werden soll.

12. Das Gerät gemäß Anspruch 1, **dadurch gekennzeichnet, daß** das genannte Traggestell geeignet ist, auf eine landwirtschaftliche Maschine montiert zu werden.

13. Das Gerät gemäß Anspruch 5, **dadurch gekennzeichnet, daß** es einen Konzentrator (9) umfaßt, der geeignet ist, am Eingang Signale zu empfangen, die durch die genannte Verarbeitungseinheit ausgesandt werden, und die genannten Signale in Befehle umzuwandeln, welche die genannten Antriebe steuern, welche für die Bewegung der genannten Schneidevorrichtungen bestimmt sind.

## Revendications

1. Appareil de taille automatisée de plantes de type arbre, notamment de vignes et similaires, comprenant une structure de support (2, 12) qui est en mesure de soutenir de façon réglable au moins un dispositif de taille (3), **caractérisé en ce qu'**il comprend au moins un dispositif de relevé d'images (6) permettant de relever la position de la plante de type arbre par rapport audit au moins dispositif de taille, et une unité de traitement (10) prévue pour envoyer des signaux de commande pour le réglage de la position audit au moins dispositif de taille, en fonction desdites images relevées de la tige (8) de ladite plante de type arbre par rapport audit au moins dispositif de taille.

2. Appareil selon la revendication 1, **caractérisé en ce que** ledit au moins dispositif de relevé d'images comprend au moins une caméra de télévision qui est conçue pour prendre des images de ladite tige de la plante de type arbre en relation avec lesdits dispositifs de taille.

3. Appareil selon la revendication 2, **caractérisé en ce qu'**il comprend une paire de caméras de télévision placées de façon à pouvoir pointer vers le haut pour encadrer ladite plante de type arbre.

4. Appareil selon la revendication 3, **caractérisé en ce que** lesdites caméras de télévision sont placées en angle l'une par rapport à l'autre.

5. Appareil selon la revendication 1, **caractérisé en ce qu'**il comprend une pluralité de dispositifs de taille commandés pour effectuer un mouvement par les actionneurs respectifs (4, 5), lesdits actionneurs étant pilotés par des signaux de commande envoyés par ladite unité de traitement.

6. Appareil selon la revendication 1, **caractérisé en ce qu'**il comprend des outils d'affichage (11) reliés à ladite unité de traitement de manière à afficher la condition générale des opérations dudit appareil.

7. Appareil selon la revendication 5, **caractérisé en ce que** lesdits dispositifs de taille sont déplacés autant verticalement que transversalement par rapport à la tige de la plante de type arbre dont il faut réaliser la taille.

8. Appareil selon la revendication 2, **caractérisé en ce que** ladite unité de traitement traite les images provenant de ladite au moins une caméra de télévision de manière à déterminer une distance de taille de la ligne barycentrique de la tige ou de la branche principale dont il faut faire la taille, de façon constante ou variable.

9. Appareil selon la revendication 2, **caractérisé en ce que** ladite au moins une caméra de télévision est rigidement accouplée avec ledit au moins un dispositif de taille.

10. Appareil selon la revendication 1, **caractérisé en ce que** ladite structure de support a une forme en L.

11. Appareil selon la revendication 10, **caractérisé en ce que** ladite structure de support a la forme d'un U renversé ou d'un T, de manière à pouvoir se placer à cheval sur la plante de type arbre devant être taillée.

12. Appareil selon la revendication 1, **caractérisé en ce que** ladite structure de support est prévue pour être montée sur une machine agricole.

13. Appareil selon la revendication 5, **caractérisé en ce qu'**il comprend une unité de concentration (9) qui est prévue pour recevoir en entrée des signaux émis par ladite unité de traitement et pour convertir lesdits signaux en commandes permettant d'actionner lesdits actionneurs prévus pour déplacer lesdits dispositifs de taille.
